(19) Europäisches Patentamt
European Patent Office
Office européen des brevets

(11) **EP 4 310 559 A1**

(12) **EUROPEAN PATENT APPLICATION**
published in accordance with Art. 153(4) EPC

(43) Date of publication:
**24.01.2024 Bulletin 2024/04**

(21) Application number: **22771529.9**

(22) Date of filing: **17.03.2022**

(51) International Patent Classification (IPC):
$G02B\ 5/30$ (2006.01)     $B32B\ 7/023$ (2019.01)
$G02B\ 5/08$ (2006.01)     $G02C\ 7/10$ (2006.01)
$G02C\ 7/12$ (2006.01)

(52) Cooperative Patent Classification (CPC):
B32B 7/023; G02B 5/08; G02B 5/30; G02C 7/10; G02C 7/12

(86) International application number:
**PCT/JP2022/012464**

(87) International publication number:
**WO 2022/196784 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2021 JP 2021045239**

(71) Applicants:
• **Nippon Kayaku Kabushiki Kaisha**
  **Tokyo 100-0005 (JP)**
• **MGC Filsheet Co., Ltd.**
  **Tokorozawa-shi, Saitama 359-1164 (JP)**
• **MITSUBISHI GAS CHEMICAL COMPANY, INC.**
  **Chiyoda-ku**
  **Tokyo 100-8324 (JP)**

(72) Inventors:
• **NUMA, Yosuke**
  **Joetsu-shi, Niigata 944-0101 (JP)**
• **KAWASHIMA, Takashi**
  **Joetsu-shi, Niigata 944-0101 (JP)**
• **SEGAWA, Junichi**
  **Joetsu-shi, Niigata 944-0101 (JP)**
• **TANAKA, Koichi**
  **Joetsu-shi, Niigata 944-0101 (JP)**
• **KAKINUMA, Yuka**
  **Tokorozawa-shi, Saitama 359-1164 (JP)**

(74) Representative: **Hoffmann Eitle**
**Patent- und Rechtsanwälte PartmbB**
**Arabellastraße 30**
**81925 München (DE)**

(54) **OPTCAL LAMINATE AND EYEWEAR USING SAME**

(57)     To provide an optical laminate that exhibits an achromatic silver color even when observed from any angle in the case of using an optical laminate including a cholesteric liquid crystal layer exhibiting a silver color, and a polarizing lens and eyewear using the same.

An optical laminate for eyewear includes a light reflecting layer comprising at least one cholesteric liquid crystal layer; and a support sandwiching the light reflecting layer, in which a reflection hue of the light reflecting layer exhibits a silver color, the light reflecting layer has a reflection characteristic over a wavelength range of at least 380 nm to 900 nm, and an absolute value of a difference ($\Delta R1 - R2$) between an average reflectance ($R1$) at 500 nm to 700 nm and an average reflectance ($R2$) at 701 nm to 900 nm of the light reflecting layer is 10 points or less in the wavelength range.

FIG. 1

EP 4 310 559 A1

**Description**

Technical Field

The present invention relates to an optical laminate including a light reflecting layer formed of a cholesteric liquid crystal layer and further including a polarizing element, and a lens for eyewear and eyewear (such as sunglasses, goggles, and helmet visors) using the optical laminate.

Background Art

Eyewear (such as sunglasses, goggles, and visors) is used to reduce glare caused by reflected light from a water surface, a road surface, a snow surface, or the like. For example, in sunglasses, a lens portion is colored with a dye or the like, and reflected light is absorbed by the dye. As a result, the amount of light incident on the eyes of the sunglasses wearer can be reduced, and glare can be reduced. Meanwhile, in general, since reflected light on a water surface and a snow surface has a property of being polarized light, polarized sunglasses are particularly effective for these reflected light. Since the polarized sunglasses are designed to effectively absorb light in the polarization direction, it is possible to reduce glare and improve visibility without greatly reducing the amount of light incident on the eyes.

An optical film used for polarized sunglasses generally has a configuration in which a polarizing element is sandwiched between support materials such as polycarbonate. Polarized sunglasses can be produced by processing such an optical film into a desired shape and fitting the optical film into a frame. The polarizing element is a film in which a so-called dichroic dye such as a dichroic pigment or a polyiodine-polyvinyl alcohol (PVA) complex is uniaxially oriented together with a polymer such as PVA, and polarizing elements of various colors can be obtained depending on the color of the dye to be used. In the case of normal sunglasses, the polarizing element is often colored in a grayish color in order to impart polarizability to the entire visible light region.

In order to impart designability or further improve visibility in polarized sunglasses, a multilayer film may be deposited on the surface. It is known that, by providing the multilayer film, reflected light on the sunglasses surface can be visually recognized in a metallic color tone such as blue, green, and red by a person not wearing the polarized sunglasses, and a silver color tone can be provided by making the waveform of the reflected light in the visible light region of the multilayer film substantially flat. Depending on wearers, since specific light is reflected, the visibility of the scene through the lens is further improved as well as the glare is reduced. While it is beneficial for the wearer to provide the multilayer film in this manner, the multilayer film has a handling problem that sebum or the like is difficult to be removed when adhering to the multilayer film and the multilayer film may be peeled off in a place exposed to water such as the sea and sea breeze.

In view of such a problem, a method of providing the multilayer film inside the support material, that is, between the polarizing element and the support material is considered. However, since the multilayer film exhibits reflection performance due to a difference in refractive index between the layers, it is difficult for the multilayer film to obtain reflection performance equivalent to that of an air interface. In addition, since the multilayer film is produced with an inorganic substance, there is also a problem in adhesion to a polarizing element which is an organic substance.

Meanwhile, a method using a cholesteric liquid crystal layer is known as a method of imparting reflected light of a metallic color tone with an organic substance without using a multilayer film. Cholesteric liquid crystal is in a state in which liquid crystal molecules are helically aligned and has a function of selectively reflecting a circularly polarized light component in the same direction as the direction of the helix of the liquid crystal molecules in a specific wavelength region depending on the length of the helical pitch. An optical laminate using a cholesteric liquid crystal layer in which helical alignment is fixed so that light is reflected in a desired wavelength region exhibits reflected light of a vivid color tone and can impart decorativeness to various members (Patent Literature 1).

In addition, the reflection characteristics of the cholesteric liquid crystal layer have angle dependence, and the color tone appears to change when observed by changing angles. As a result, for example, in addition to the red metallic color, it is possible to impart unique designability in which the color tone appears to change to yellow or orange depending on the angle viewed from the surrounding observer.

Meanwhile, in polarized sunglasses using an optical laminate including the cholesteric liquid crystal layer, a color tone exhibiting an achromatic silver color (silver color) is required in addition to a metallic design such as blue, green, and red. In order to obtain a silver reflection color in the cholesteric liquid crystal layer, for example, there is a method of laminating cholesteric liquid crystal layers having respective reflection colors of blue, green, and red to uniformize the reflection characteristics over the visible light region in order to uniformize the reflection characteristics of visible light. However, this method is not easy because a producing process and quality control for individually producing and laminating each liquid crystal layer are complicated.

In addition, it is known that in order to make the reflection characteristics of the cholesteric liquid crystal layer flat in wavelength characteristics over the visible light region, it can be realized by a cholesteric liquid crystal layer including one layer by using a liquid crystal material in which the helical pitch is continuously changed (Non Patent Literature 1). The optical film including the liquid crystal layer is applied as, for example, a luminance improving film used for a liquid crystal display device or the like.

However, in eyewear applications, these cholesteric liquid crystal layers are generally subjected to shaping processing into a curved shape (curved surface) and then integrally molded with a resin to form a polarizing lens, and thus are observed in a state having a curved surface. Therefore, even when the cholesteric liquid crystal layer is used, since the surface of the polarized sunglasses is observed in a state having angle dependence, there is a problem that the color tone of the surface is not uniform and the surface looks colored. In particular, in those reproducing metallic gloss such as a silver color, those without coloring are strongly desired, and eyewear that exhibits an achromatic silver color even when observed from any angle and does not deteriorate designability has been required even when such an optical laminate is used.

Citation List

Patent Literature

Patent Literature 1: WO 2016/002582 A

Non Patent Literature

Non Patent Literature 1: Journal of Japanese Liquid Crystal Society Vol. 2 No. 2, issued on April 25, 1998

Summary of Invention

Technical Problem

Therefore, in view of the above problems, an object of the present application is to provide an optical laminate that exhibits an achromatic silver color even when observed from any angle in the case of using an optical laminate including a cholesteric liquid crystal layer exhibiting a silver color, and a polarizing lens and eyewear using the same.

Solution to Problem

As a result of intensive studies to solve the above problems, the present inventors have found an optical laminate having the following configuration and completed the present invention.

The present invention relates to the following [1] to [7].

[1] An optical laminate for eyewear comprising:

a light reflecting layer comprising at least one cholesteric liquid crystal layer; and
a support sandwiching the light reflecting layer, in which
a reflection hue of the cholesteric liquid crystal layer exhibits a silver color,
the cholesteric liquid crystal layer has a reflection characteristic over at least a wavelength range of 380 nm to 900 nm, and
an absolute value of a difference ($\Delta$R1 - R2) between an average reflectance (R1) of the visible light region at 500 nm to 700 nm and an average reflectance (R2) at at least 701 nm to 900 nm of the cholesteric liquid crystal layer is 10 points or less in the wavelength range.

[2] The optical laminate for eyewear according to [1], in which the amount of change in the reflection hue of the cholesteric liquid crystal layer satisfies $|\Delta a^*| \leq 2.0$ and $|\Delta b^*| \leq 2.0$ when an observation position is inclined to 60° where a direction in which the observation position is perpendicular to a reflective surface is set as 0°.
[3] The optical laminate for eyewear according to [1] or [2], in which the light reflecting layer is formed by laminating a cholesteric liquid crystal layer (R form) having a right-handed helical direction and a cholesteric liquid crystal layer (L form) having a left-handed helical direction.
[4] The optical laminate for eyewear according to any one of [1] to [3], further comprising a polarizing element.
[5] The optical laminate for eyewear according to any one of [1] to [4], comprising, in this order from an external light incident side: the support; the cholesteric liquid crystal layer; the polarizing element; and the support.
[6] The optical laminate for eyewear according to [5], in which a visibility correction polarization degree (Py) is 75% or more and less than 100%.

[7] A lens including: the optical laminate for eyewear according to any one of claims [1] to [6].
[8] Eyewear including the lens according to [7].

Advantageous Effects of Invention

According to the present invention, it is possible to provide an optical laminate that exhibits an achromatic silver color even when observed from any angle in the case of using an optical laminate including a cholesteric liquid crystal layer exhibiting a silver color, and a polarizing lens and eyewear using the same.

Brief Description of Drawings

Fig. 1 illustrates a diagram in which a cholesteric liquid crystal layer according to the present invention is formed on a plastic base material.
Fig. 2 illustrates an example of an aspect of an optical laminate of the present invention.

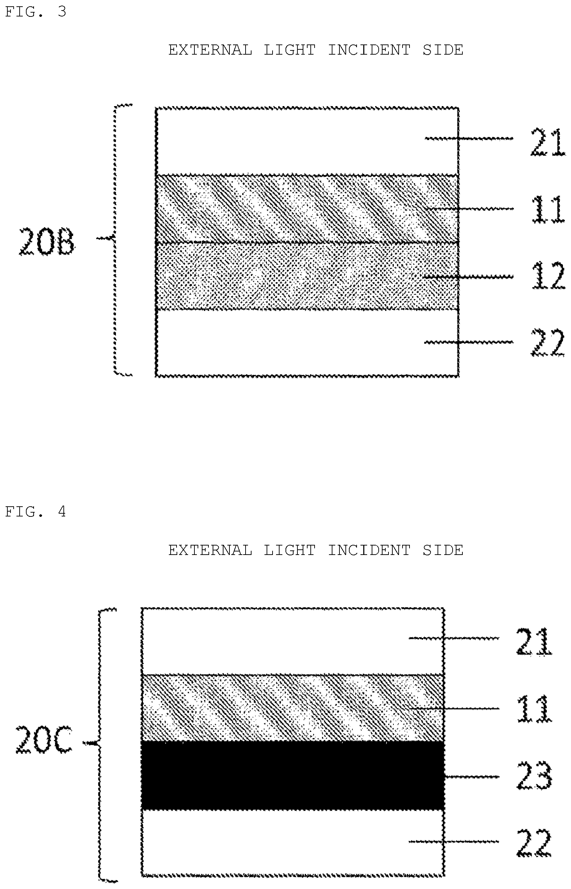

Fig. 3 illustrates another example of the aspect of the optical laminate of the present invention.
Fig. 4 illustrates another example of the aspect of the optical laminate of the present invention.
Fig. 5 illustrates another example of the aspect of the optical laminate of the present invention.
Fig. 6 illustrates a conceptual diagram of a device for measuring angle dependence of a reflection hue of the optical laminate or the like of the present invention.
Fig. 7 illustrates reflection spectra of cholesteric liquid crystal layers (or optical laminates) produced in Example 1 and Comparative Examples 1 and 2.
Fig. 8 illustrates reflection spectra of cholesteric liquid crystal layers (or optical laminates) produced in Examples 2 to 5.

Description of Embodiments

The present invention is specifically described but is not limited to the following. An optical laminate according to the present embodiment (hereinafter, also referred to as an "optical laminate of the present invention") includes a support and a cholesteric liquid crystal layer (hereinafter, also referred to as a light reflecting layer), and optionally includes a polarizing element and another support. Hereinafter, these are sequentially described.

(Cholesteric Liquid Crystal Layer)

The cholesteric liquid crystal used in the present invention includes a nematic liquid crystal having chirality or a formulation obtained by adding a chiral agent to a nematic liquid crystal. Cholesteric liquid crystals obtained by adding a chiral agent to a nematic liquid crystal are preferable because the direction of a spiral or a reflection wavelength can be arbitrarily designed depending on the type or amount of the chiral agent. The nematic liquid crystal used in the present invention is preferably a nematic liquid crystal monomer having a polymerizable group since the nematic liquid crystal is used in a state in which a helical alignment state is fixed unlike a liquid crystal operated by a so-called electric field.
The nematic liquid crystal monomer having a polymerizable group is a compound having a polymerizable group in the molecule and exhibiting liquid crystallinity in a specific temperature range or concentration range. Examples of the polymerizable group include a (meth)acryloyl group, a vinyl group, a chalconyl group, a cinnamoyl group, and an epoxy group. In addition, in order to exhibit liquid crystallinity, it is preferable to have a mesogenic group in the molecule, and the mesogenic group means a rod-like or plate-like substituent such as a biphenyl group, a terphenyl group, a (poly)benzoic acid phenyl ester group, a (poly)ether group, a benzylideneaniline group, or an acenaphthoquinoxaline group, or a disk-like substituent such as a triphenylene group, a phthalocyanine group, or an azacrowne group, that is, a group having an ability to induce a liquid crystal phase behavior. Liquid crystal compounds having a rod-like or plate-like substituent are known in the corresponding technical field as calamitic liquid crystals. Specific examples of the nematic liquid crystal monomer having a polymerizable group include polymerizable liquid crystals described in JP 2003-315556 A, JP 2004-29824 A, and the like, PALIOCOLOR series (manufactured by BASF SE), and RMM series (manufactured by Merck). These nematic liquid crystal monomers having a polymerizable group can be used alone or in combination of two or more.
As the chiral agent, a compound having a polymerizable group is preferred as in the case of the nematic liquid crystal monomer having a polymerizable group, which can helically align the nematic liquid crystal monomer having a polymerizable group in a right-handed direction (R form) or a left-handed direction (L form). Examples of the chiral agent include Paliocolor LC756 (manufactured by BASF SE) and compounds described in JP 2002-179668 A. The direction of the circularly polarized light to be reflected is determined by the type of the chiral agent, and furthermore, the reflection wavelength of the cholesteric liquid crystal layer can be changed according to the addition amount of the chiral agent with respect to the nematic liquid crystal. For example, as the addition amount of the chiral agent is increased, a cholesteric liquid crystal layer that reflects a wavelength on a short wavelength side can be obtained. The addition amount of the chiral agent varies depending on the type of the chiral agent and the wavelength to be reflected, but is preferably 0.5 to 30 parts by weight, more preferably 1 to 20 parts by weight, and still more preferably 3 to 10 parts by weight with respect to 100 parts by weight of the nematic liquid crystal monomer having a polymerizable group in order to adjust the central reflection wavelength of the cholesteric liquid crystal layer with respect to normal light to a desired wavelength region.

Furthermore, it is also possible to add a polymerizable compound having no liquid crystallinity capable of reacting with the nematic liquid crystal monomer having a polymerizable group. Examples of such a compound include a polymerizable compound that forms an ultraviolet curable resin or the like. Examples of the ultraviolet curable resin include dipentaerythritol hexa(meth)acrylate, a reaction product of dipentaerythritol penta(meth)acrylate and 1,6-hexamethylene diisocyanate, a reaction product of triisocyanate having an isocyanuric ring and pentaerythritol tri(meth)acrylate, a reaction product of pentaerythritol tri(meth)acrylate and isophorone diisocyanate, dipentaerythritol penta(meth)acrylate, dipentaerythritol tetra(meth)acrylate, pentaerythritol tetra(meth)acrylate, pentaerythritol tri(meth)acrylate, trimethylolpropane tri(meth)acrylate, ditrimethylolpropane tetra(meth)acrylate, tris(acryloxyethyl) isocyanurate, tris(methacryloxyethyl) isocyanurate, a reaction product of glycerol triglycidyl ether and (meth)acrylic acid, caprolactone-modified tris(acryloxyethyl) isocyanurate, a reaction product of trimethylolpropane triglycidyl ether and (meth)acrylic acid, triglycerol di(meth)acrylate, a reaction product of propylene glycol diglycidyl ether and (meth)acrylic acid, polypropylene glycol di(meth)acrylate, tripropylene glycol di(meth)acrylate, polyethylene glycol di(meth)acrylate, tetraethylene glycol di(meth)acrylate, triethylene glycol di(meth)acrylate, pentaerythritol di(meth)acrylate, a reaction product of 1,6-hexanediol diglycidyl ether and (meth)acrylic acid, 1,6-hexanediol di(meth)acrylate, glycerol di(meth)acrylate, a reaction product of ethylene glycol diglycidyl ether and (meth)acrylic acid, a reaction product of diethylene glycol diglycidyl ether and (meth)acrylic acid, bis(acryloxyethyl) hydroxyethyl isocyanurate, bis(methacryloxyethyl) hydroxyethyl isocyanurate, a reaction product of bisphenol A diglycidyl ether and (meth)acrylic acid, tetrahydrofurfuryl (meth)acrylate, caprolactone-modified tetrahydrofurfuryl (meth)acrylate, 2-hydroxyethyl (meth)acrylate, 2-hydroxypropyl (meth)acrylate, polypropylene glycol (meth)acrylate, polyethylene glycol (meth)acrylate, phenoxyhydroxypropyl (meth)acrylate, acryloylmorpholine, methoxypolyethylene glycol (meth)acrylate, methoxytetraethylene glycol (meth)acrylate, methoxytriethylene glycol (meth)acrylate, methoxyethylene glycol (meth)acrylate, methoxyethyl (meth)acrylate, glycidyl (meth)acrylate, glycerol (meth)acrylate, ethyl carbitol (meth)acrylate, 2-ethoxyethyl (meth)acrylate, N,N-dimethylaminoethyl (meth)acrylate, 2-cyanoethyl (meth)acrylate, a reaction product of butyl glycidyl ether and (meth)acrylic acid, butoxytriethylene glycol (meth)acrylate, and butanediol mono(meth)acrylate, and these can be used alone or in combination of two or more. These polymerizable compounds having no liquid crystallinity must be added to such an extent that the nematic liquid crystal monomer having a polymerizable group does not lose the liquid crystallinity, and the content is preferably 0.1 to 20 parts by weight and more preferably 1.0 to 10 parts by weight with respect to 100 parts by weight of the nematic liquid crystal monomer having a polymerizable group.

When the nematic liquid crystal monomer having a polymerizable group used in the present invention and the other polymerizable compound are of an ultraviolet curing type, a photopolymerization initiator is added in order to cure the composition containing these with ultraviolet rays. Examples of the photopolymerization initiator include 2-methyl-1-[4-(methylthio) phenyl]-2-morpholinopropane-1, 1-hydroxycyclohexyl phenyl ketone, 4-(2-hydroxyethoxy)-phenyl (2-hydroxy-2-propyl) ketone, 1-(4-dodecylphenyl)-2-hydroxy-2-methylpropane-1-one, 1-(4-isopropylphenyl)-2-hydroxy-2-methylpropane-1-one, 2-hydroxy-2-methyl-1-phenylpropane-1-one, an acetophenone-based compound such as diethoxyacetophenone, a benzoin-based compound such as benzoin, benzoin methyl ether, benzoin ethyl ether, benzoin isopropyl ether, benzoin isobutyl ether, and 2,2-dimethoxy-2-phenylacetophenone; a benzophenone-based compound such as benzoylbenzoic acid, methyl benzoylbenzoate, 4-phenylbenzophenone, hydroxybenzophenone, 4-benzoyl-4'-methyldiphenylsulfide, and 3,3'-dimethyl-4-methoxybenzophenone (KAYACURE MBP manufactured by Nippon Kayaku Co., Ltd.), a thioxanthone-based compound such as thioxanthone, 2-chlorthioxanthone (KAYACURE CTX manufactured by Nippon Kayaku Co., Ltd.), 2-methylthioxanthone, 2,4-dimethylthioxanthone (KAYACURE RTX manufactured by Nippon Kayaku Co., Ltd.), isopropylthioxanthone, 2,4-dicloothioxanthone (KAYACURE CTX manufactured by Nippon Kayaku Co., Ltd.), 2,4-diethylthioxanthone (KAYACURE DETX manufactured by Nippon Kayaku Co., Ltd.), and 2,4-diisopropylthioxanthone (KAYACURE DITX manufactured by Nippon Kayaku Co.). Preferable examples include Omnirad TPO, Omnirad TPO-L, Omnirad OXE01, Omnirad OXE02, Omnirad 1300, Omnirad 184, Omnirad 369, Omnirad 379, Omnirad 819, Omnirad 127, Omnirad 907, or Omnirad 1173 (all are manufactured by IGM Resins B.V.), and particularly preferable examples include Omnirad TPO, Omnirad TPO-L, Omnirad OXE01, Omnirad OXE02, Omnirad 1300, or Omnirad 907. These photopolymerization initiators may be used alone or in combination at any ratio.

When a benzophenone-based compound or a thioxanthone-based compound is used as the photopolymerization initiator, it is also possible to use an auxiliary agent in combination in order to promote the photopolymerization reaction. Examples of the auxiliary agent include amine-based compounds such as triethanolamine, methyldiethanolamine, triisopropanolamine, n-butylamine, N-methyldiethanolamine, diethylaminoethyl methacrylate, Michler's ketone, 4,4'-diethylaminophenone, ethyl 4-dimethylaminobenzoate, ethyl 4-dimethylaminobenzoate (n-butoxy), and isoamyl 4-dimethylaminobenzoate.

The addition amount of the photopolymerization initiator and the auxiliary agent is preferably in a range that does not affect the liquid crystallinity of the composition containing the nematic liquid crystal monomer used in the present invention, and the amount thereof is preferably 0.5 parts by weight or more and 10 parts by weight or less and more preferably 2 parts by weight or more and 8 parts by weight or less, with respect to 100 parts by weight of the compound that cures with ultraviolet rays in the composition. The amount of the auxiliary agent may be 0.5 times to 2 times the amount of the photopolymerization initiator.

The composition further contains a solvent. Such a solvent is not particularly limited as long as the solvent can dissolve the liquid crystal compound, the chiral agent, and the like to be used, examples thereof include methyl ethyl ketone, toluene, methyl isobutyl ketone, cyclopentanone, acetone, and anisole, and cyclopentanone having good solubility is preferable. In addition, these solvents can be added in an arbitrary ratio, and only one solvent may be added, or a plurality of solvents may be used in combination. These solvents are dried and removed by a drying oven or a drying facility of a film coating device.

As a method for producing the cholesteric liquid crystal layer of the present invention by using the cholesteric liquid crystal, for example, a necessary amount of a right-handed or left-handed chiral agent is added to a nematic liquid crystal monomer having a polymerizable group so as to reflect a desired wavelength. Next, these are dissolved in a solvent, and a photopolymerization initiator is added. Thereafter, this solution is applied onto a plastic base material such as a polyethylene terephthalate (PET) film so that the thickness becomes as uniform as possible, and the coating film is allowed to stand for a certain period of time under a temperature condition in which cholesteric liquid crystal is formed on the base material and alignment is performed at a desired helical pitch while the solvent is removed by heating. At this time, since the plastic film surface is subjected to alignment treatment such as rubbing or stretching before application, the alignment of the cholesteric liquid crystal can be made more uniform, and the haze value of each cholesteric liquid crystal layer can be reduced. Next, in a state where the helical pitch is continuously changed so as to be reflected from the visible light region to the near-infrared region, ultraviolet rays are applied with a high-pressure mercury lamp or the like to fix the alignment, whereby a cholesteric liquid crystal layer exhibiting a sliver color used in the present invention can be obtained. As a method for continuously changing the helical pitch, for example, there is a method described in JP 2003-139953 A in which the atmosphere or the irradiation surface of the ultraviolet ray is set in a specific direction when curing by irradiation with the ultraviolet ray. At this time, the reflection band can be adjusted to a desired reflection band by adjusting the oxygen concentration in the atmosphere of irradiation with ultraviolet rays, the irradiation amount of ultraviolet rays, the irradiation time, the irradiation temperature, and the like. In order to obtain the silver cholesteric liquid crystal layer used in the present invention, the reflection band is at least 380 nm to 850 nm, preferably 380 nm to 900 nm, and more preferably about 380 nm to 1000 nm.

The film thickness of the cholesteric liquid crystal layer after formation is preferably 1 um to 15 um and more preferably 2 um to 10 um.

Note that the configuration of the cholesteric liquid crystal layer of the optical laminate may include both the cholesteric liquid crystal layer R form and the cholesteric liquid crystal layer L form in order to impart high polarization characteristics in a case where the cholesteric liquid crystal layer is laminated with the polarizing layer according to the design of eyewear, or in a case where the polarization characteristics are not emphasized, only the light reflecting layer of either the cholesteric liquid crystal layer R form or the cholesteric liquid crystal layer L form may be provided. Further, these configurations are not particularly limited as long as the effects of the present invention are achieved, and any of these configurations can be used.

The cholesteric liquid crystal layer according to the present invention exhibiting an achromatic silver color generally refers to a color having brilliance (also referred to as gloss) like metallic silver and refers to, as an example of the reflectance, a state in which the cholesteric liquid crystal layer is substantially uniformly distributed over a visible light region (wavelength 380 nm to 780 nm) and is visually recognized as colorless silver gloss, perceptually. Specifically, the hue is about a* = - 2 to +2 and b* = -4 to +4.

As described above, by continuously changing the helical pitch over the visible light region, reflection characteristics without wavelength dependency, that is, colorless silver can be obtained.

The reflectance of the cholesteric liquid crystal layer of the present invention depends on the design of eyewear, but the average reflectance in the visible light region (380 nm to 780 nm) is preferably at least 10% or more and more preferably 20% or more. This makes it possible to impart a bright and mirror-like surface having a metallic luster. Note that the reflectance may be measured in the aspect of an optical laminate described below.

In the cholesteric liquid crystal layer according to the present invention, since the reflection characteristics have angle dependence, it is preferable that the cholesteric liquid crystal layer has reflectance almost uniformly over the wavelength range of the visible light region and further over the near-infrared region (wavelength: 781 nm or more). It is known that the angle dependence is a phenomenon in which the complicated layered structure of the liquid crystal layer is caused due to the relationship between the angles of the light incident on the cholesteric liquid crystal layer and the light reflected accordingly, and, as a result, the entire reflection waveform is shifted to the short wavelength side. Therefore, the waveform structure in the long wavelength band deviated by this shift causes coloring. Therefore, since reflection characteristics are the same even in the near-infrared region, and thus the characteristics are directly shifted to the visible light region, so that it is possible to function as a light reflecting layer with less coloring.

Furthermore, in view of the band of the waveform shift described above, the absolute value (also represented as |ΔR1 - R2|) of the difference (ΔR1 - R2) between the average reflectance (hereinafter, referred to as R1) in the wavelength range of at least 500 nm to 700 nm and the average reflectance (hereinafter, referred to as R2) in the wavelength range of at least 701 nm to 900 nm of the cholesteric liquid crystal layer is preferably 10 points or less, more preferably 5 points or less, and still more preferably 3 points or less. The reflection characteristics in the visible light region and the near-infrared region are substantially uniformly provided over these wavelength ranges by setting the reflectance difference within the above range, and thus it is possible to provide an achromatic silver color without completely coloring even if wavelength shift occurs due to angle dependence. On the other hand, since the cholesteric liquid crystal layer has reflection characteristics in the near-infrared region as described above when the reflectance difference exceeds ±10%, coloring of the cholesteric liquid crystal layer due to the angle dependence can be reduced, but a sufficiently achromatic color tone cannot be obtained.

In order to obtain such a light reflecting layer having a small reflectance difference in each wavelength band, the number of helical pitches in the cholesteric liquid crystal layer may be made similar for each wavelength band to equalize the selected reflectances. For this purpose, it is preferable to lengthen the alignment time of the cholesteric liquid crystal. How long the alignment time is to be can be appropriately determined according to a method of applying the temperature and the type of the chiral agent.

In the evaluation of |ΔR1 - R2|, since the reflection characteristics of two wavelength ranges are relatively compared by using the average value thereof, the wavelength ranges of both R1 and R2 and the values of the boundary thereof are not limited to the above ranges. For example, R1 may be 500 nm to 699 nm, R2 may be 700 nm to 900 nm, R1 may be 499 nm to 700 nm, and R2 may be 701 nm to 899 nm. In addition, when measurement is performed so that the wavelength interval is 5 nm pitch under the measurement conditions of the spectrophotometer, for example, R1 may have a wavelength of 500 nm to 700 nm, and R2 may have a wavelength of 705 nm to 900 nm.

The optical laminate according to the present invention preferably has a configuration in which only the cholesteric liquid crystal layer or the cholesteric liquid crystal layer and the polarizing element are sandwiched between supports, and any configuration can be appropriately employed depending on the design and application of eyewear.

(Polarizing Element)

Examples of the polarizing element (also referred to as a polarizing element film) used in the present invention include polyvinyl alcohol (PVA)-based polarizing films and coating type polarizing films, and typically, PVA-based polarizing films can be suitably used. As a method for producing the PVA-based polarizing film, a known stretching method can be applied, and the PVA-based polarizing film is produced by adsorbing a dye such as iodine or a dichroic dye on a polymer film containing PVA or a derivative thereof and stretching and aligning the film about 2 to 5 times uniaxially. In particular, a dichroic dye is preferable from the viewpoint of hue design and designability, and a direct dye containing an azo dye having a sulfonate group is more preferable from the viewpoint of heat resistance. In the present invention, an aspect of a polarizing element in which a support is laminated or which is sandwiched between supports is referred to as a polarizing plate.

Examples of the dichroic dye include C.I. Direct Yellow 12, C.I. Direct Yellow 28, C.I. Direct Yellow 44, C.I. Direct Yellow 142, C.I. Direct Orange 26, C.I. Direct Orange 39, C.I. Direct Orange 71, C.I. Direct Orange 107, C.I. Direct Red 2, C.I. Direct Red 31, C.I. Direct Red 79, C.I. Direct Red 81, C.I. Direct Red 117, C.I. Direct Red 247, C.I. Direct Green 80, C.I. Direct Green 59, C.I. Direct Blue 71, C.I. Direct Blue 78, C.I. Direct Blue 168, C.I. Direct Blue 202, C.I. Direct Violet 9, C.I. Direct Violet 51, C.I. Direct Brown 106, and C.I. Direct Brown 223, and these dyes may be used alone or in blend of a plurality thereof in general.

In addition, as the dichroic dye, a dye that can be produced by a known method may be used, and examples of the known method include the method described in JP H03-12606 A and the method described in JP 59-145255 A. Examples of commercially available dyes include Kayafect Violet P Liquid (manufactured by Nippon Kayaku Co., Ltd.), Kayafect Yellow Y and Kayafect Orange G, Kayafect Blue KW, and Kayafect Blue Liquid 400.

Two to three or more of the dichroic dyes described above are blended, and the optical characteristics (mainly a visibility correction transmittance Ys and the visibility correction polarization degree Py), the hue (for example, a value obtained in the CIE 1976 color space (L*, a*, b*)), and the like are designed in accordance with the application and design of eyewear products such as polarized sunglasses.

As an example of the polarizing element used in the present invention, it is preferable that the polarizing element exhibits a neutral gray hue from the viewpoint of optical characteristics of the visibility correction equivalent transmittance Ys = 10% to 60% and the visibility correction polarization degree of 60% or more and not affecting the field of view of the eyewear wearer. Examples of the polarizing element for polarized sunglasses including commercially available dichroic dyes include Grey type manufactured by Nippon Kayaku Co., Ltd. and NYSH-30 manufactured by Nippon Kayaku Co., Ltd., which are made of PVA-based resin films (each having a film thickness of 25 to 35 um), and these can be preferably applied as the polarizing element used in the present invention. In addition, as the hue of the polarizing element, for example, one having a hue such as brown may be employed according to the design of eyewear and the visibility of the field of view.

In particular, in the case of combining the cholesteric liquid crystal layer according to the present invention and the polarizing element, it is particularly preferable to appropriately adjust the type of dye used in the polarizing element and the blending ratio thereof in the case of using a plurality of dyes so that the hue of transmission when worn as sunglasses, for example, the relative visibility attenuation rate Q value defined in JIS T7333 regarding the visibility of the traffic light falls within the standard.

Specifically, the Q value is adjusted to be equal to or more than the following value.

$Q_{red}$ (red): 0.8
$Q_{yellow}$ (yellow): 0.6
$Q_{green}$ (green): 0.6
$Q_{blue}$ (blue): 0.4

The optical laminate of the present invention adapted to such a signal visibility standard is particularly preferable as eyewear used when driving an automobile. In addition, the polarization degree only needs to have sufficient polarization performance as sunglasses, and Py is preferably 70% or more, more preferably 80% or more, and still more preferably 90% or more.

(Optical Laminate)

The configuration of the optical laminate of the present invention is exemplarily described below, but the optical laminate of the present invention is not limited thereto. One aspect of the optical laminate is a configuration of a first support/cholesteric liquid crystal layer R form (or L form)/second support. Another aspect is a configuration of first support/cholesteric liquid crystal layer L form (or R form)/cholesteric liquid crystal layer R form (or L form)/second support. When the optical laminate includes a polarizing element, for example, the optical laminate has a configuration of first support/cholesteric liquid crystal layer R form (or L form)/polarizing element/second support or a configuration of first support/cholesteric liquid crystal layer L form (or R form)/cholesteric liquid crystal layer R form (or L form)/polarizing element/second support.

When the optical laminate includes a polarizing element, a third support may be provided between the polarizing element and the cholesteric liquid crystal layer. The first support, the second support, and the third support may be selected from the same material or may be selected from different materials according to the design of eyewear. Layers of the optical laminate each are laminated with an adhesive layer interposed therebetween. The film thickness of the support is 10 um to 200 um and preferably 40 um to 100 μm.

In the step of laminating the optical laminate, the cholesteric liquid crystal layer formed on the plastic base material such as a PET film may be configured such that the base material film is removed after adhesion to the polarizing element or the support, and other layers are sequentially laminated to obtain the above-described aspect.

(Support)

The support is a film-shaped or sheet-shaped transparent resin material, and examples thereof include materials including a polycarbonate (PC)-based resin, a triacetyl cellulose (TAC)-based resin, a polyamide (PA)-based resin, and the like. In the case of the PC-based resin, it is more preferable to use aromatic PC composed of bisphenol A. When the total light transmittance of the support is preferably 70% or more, more preferably 80% or more, and still more preferably 85% or more, visibility is easily secured. When the optimum processing temperature of the optical laminate described below is low, for example, it is preferable to select an aromatic PCC composition (all-alicyclic polyester composition), a PA-based resin having a glass transition temperature of 130°C or lower, or the like.

In addition, the PA-based resin has less optical anisotropy and suppressed birefringence as compared with the PC-based resin and is also excellent in solvent resistance. In addition, since the specific gravity is low, the weight is low, and the thermal deformation temperature is low, the workability at the time of molding is good. In addition, when used as an injection molding resin, it is preferable to use a PA-based resin from the viewpoint that it is desirable that the injection molding resin of the lens base material layer and the support of the optical laminate are made of the same material in order to prevent deterioration in appearance due to a difference in refractive index and to secure adhesion. In addition, the use of the PA-based resin is preferable from the viewpoint that the material of the frame is not limited because the whitening phenomenon of the frame due to the influence of outgas due to heating can be suppressed.

Examples of the PA-based resin include nylon including an aliphatic skeleton and aramid composed only of an aromatic skeleton. Examples of the nylon include nylon 6, nylon 11, nylon 12, and nylon 66. Examples of the aramid include para-aramid and meta-aramid. In particular, the PA-based resin used in the optical laminate of the present invention is preferably a transparent film or sheet-like resin, and for example, a commercially available nylon film (film thickness: 80 um) manufactured by EMS Inc. can be used.

(Adhesive Layer)

The adhesive layer is preferably optically colorless and transparent, and for example, an ultraviolet-curable or thermosetting adhesive including a monomer or polymer such as an aqueous adhesive including a crosslinking agent and a PVA-based resin, an acrylic polymer, a silicone-based polymer, polyester, polyurethane, polyamide, polyvinyl ether, a vinyl acetate/vinyl chloride copolymer, modified polyolefin, an epoxy-based, a fluorine-based, a natural rubber-based, or a rubber-based such as a synthetic rubber can be appropriately selected and used. In the present invention, from the viewpoint of improving the efficiency of the lamination step and easily considering the composition for establishing adhesion between layers, an ultraviolet curable adhesive including a radical polymerization type and/or a cation polymerization type, particularly a solvent-free ultraviolet curable adhesive can be suitably employed.

The thickness of the adhesive layer can be appropriately determined according to the purpose of use, adhesive force, and the like and is not particularly limited, but is generally 0.01 um to 20 um and preferably 5 um to 15 um. When the thickness of the adhesive layer is 5 um or less, there is a possibility of insufficient adhesion with an adherend, and when the thickness exceeds 15 um, there is a possibility of causing optical distortion in a product state.

Each layer of the optical laminate may be subjected to surface modification on the surface of each layer by using a commercially available treatment device such as a corona treatment or a plasma treatment at the time of an adhesion step or in a previous step thereof in order to improve adhesion.

(Formation of Lens)

The lens for eyewear of the present invention can be obtained by using the optical laminate of the present invention and molding the optical laminate into a desired shape such that the light reflecting layer is on the outer side. Furthermore, by fixing to the frame, the eyewear of the present invention such as sunglasses, goggles, or a helmet visor can be obtained. Hereinafter, an example of the step of forming the polarizing lens according to the present invention is described, but the present invention is not limited thereto.

For example, sunglasses can be produced by punching the optical laminate for eyewear of the present invention into a desired shape and then performing bending processing. The method of the bending processing is not particularly limited, and the bending may be performed through a process that can impart a shape to a spherical surface or an aspherical surface according to the purpose.

Specifically, in order to facilitate processing of the optical laminate into a lens shape together with a lens base material described below, shaping processing is performed in advance by using a hot press machine or the like. In general, a mold designed to a predetermined size is used for the shaping processing, and the shaping processing is appropriately designed according to the design of an eyewear product or the like. The optical laminate can be curved by placing the optical laminate in a bending die (concave die) and pressing the optical laminate with a hemispherical die (also referred to as a convex shape or a hot iron sphere) heated to a predetermined temperature.

The processing conditions of the bending processing are, for example, in consideration of the bendability and heat resistance (discoloration of the polarizing element, and the like) of the optical laminate, the temperature is 70°C to 120°C, preferably 80°C to 100°C, and the time is in the range of one to three minutes. At this time, only a part of the optical laminate used in the next insert molding step may be simultaneously or sequentially trimmed from the sheet-like optical laminate.

The bent product may further be injected with a resin (also referred to as a lens base material). In this case, there is also an advantage that the thickness unevenness of the optical laminate for eyewear of the present invention cannot be seen, and resin injection is used for a product particularly excellent in impact resistance, appearance, and eyestrain even in a lens having no focal refractive power. The resin to be injected is preferably the same material as the layer with which the resin to be injected is in contact in order to prevent deterioration in appearance due to a difference in refractive index.

The lens base material is a resin material used for integrating the optical laminate of the present invention and a resin and processing the optical laminate into a lens shape. In general, an insert molding method can be used for the integral processing. The lens base material is not particularly limited, and for example, a thermoplastic resin that can be molded by an injection molding method, a thermosetting resin that can be molded by subtractive polymerization or the like and is generally used for eyewear lenses and the like can be used. Examples thereof include a (meth)acrylic resin such as a methyl methacrylate homopolymer or a copolymer of methyl methacrylate and one or more other monomers; a diethylene glycol bisallyl carbonate-based resin such as a diethylene glycol bisallyl carbonate homopolymer, a copolymer of diethylene glycol bisallyl carbonate and one or more other monomers; a polysulfide-based resin such as an acrylonitrile-styrene copolymer, a halogen-containing copolymer, a homopolymer of a monomer having a sulfide bond, and a copolymer of a monomer having a sulfide bond and one or more other monomers; a polyurea-based resin, a PA-based resin, a PC-based resin, a polystyrene-based resin, a polyolefin-based resin, a polyvinyl chloride-based resin, a polyester-based resin, a PET-based resin, a sulfur-containing urethane-based resin such as a polyurethane-based resin and a polythiourethane-based resin, and an epoxy-based resin. From the viewpoint of adhesion to the optical laminate, the same material as the layer in contact with the lens base material is preferable. As a specific example, the support of the optical laminate on the side to be integrally processed is made of a PA-based resin, and the lens base material is also made of a PA-based resin in the same manner, whereby the support and the lens base material can be fused. This makes it possible to obtain a lens in which the optical laminate and the lens base material are integrated.

Furthermore, in the lens obtained as described above, a hard coat, an antireflection film, and the like are appropriately formed on the surface and then fixed to the frame by ball grinding, drilling, screw tightening, and the like, whereby the eyewear of the present invention can be obtained.

(Reflection Measurement of Light Reflecting Layer and Optical Laminate)

The reflectance of the light reflecting layer and the optical laminate can be measured in accordance with JIS Z 8722:2009 and can be measured by using, for example, a spectrophotometer U-4100 manufactured by Hitachi High-Tech Science Corporation. In the reflection measurement, total reflection measurement in which a surface of a light reflecting layer is installed on an integrating sphere of the spectrophotometer is performed. At this time, the light source is natural light, and the reflectance is an average value of reflectances measured by installing measurement samples in directions of 0 degrees and 90 degrees, respectively. In addition, by setting the detection condition of the reflectance of each wavelength to a pitch of 10 nm or less, preferably a pitch of 5 nm or less, and more preferably a pitch of 1 nm, the accuracy of the calculation of the reflectance difference can be enhanced, and the difference from the visual evaluation can be reduced.

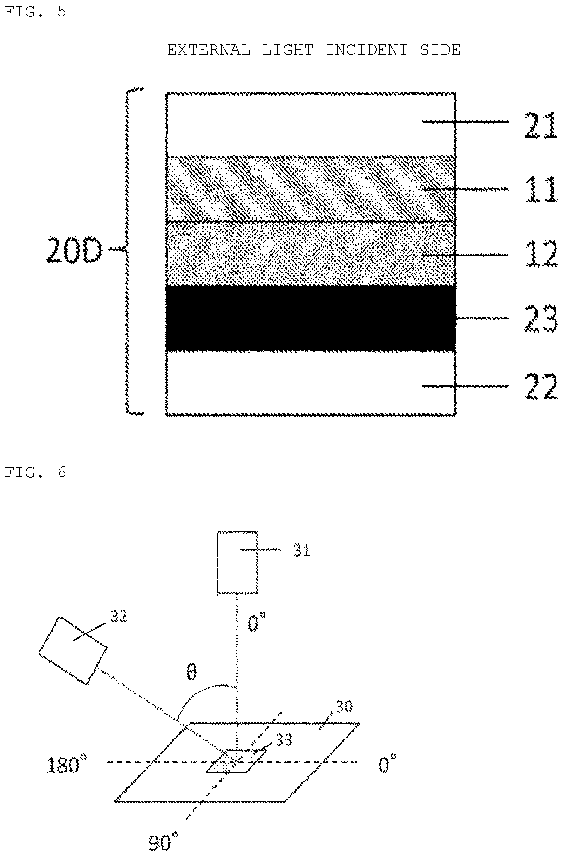

The measurement of the angle dependence of the reflection hue of the light reflecting layer and the optical laminate can be quantitatively evaluated by using, for example, a motor-type goniometer (DMS series) manufactured by Konica Minolta, Inc. Specifically, the measurement is performed in a reflection mode, and as illustrated in Fig. 6, the reflected light on the reflective surface of a sample 33 placed flat on a measurement stage 30 can be measured by a light receiving unit of the device. At this time, the light receiving unit can be inclined at an arbitrary angle (0 degrees (or represented by a symbol "°") to 70 degrees) with respect to the sample surface. Here, the inclination angle of 0 degrees is a direction perpendicular to the sample surface. In addition, the measurement stage 30 can horizontally rotate in an arbitrary orientation (0 degrees to 359 degrees, where 0 degrees are the initial installation position of the sample 33). In Fig. 6, a light receiving unit 31 of the measurement device installed at a position where the inclination angle is 0 degrees and a light receiving unit 32 of the measurement device when inclined at an angle $\theta$ are illustrated, and the inclination direction of the light receiving unit 32 is 0 degrees or 180 degrees of an azimuth of the measurement stage 30. Since the reflectance value obtained by this measurement can be obtained as dependency for each wavelength, a hue value based on the CIE 1976 color space (L*a*b*) can be obtained.

Since the measurement of the angle dependence generally takes into consideration the aspect of a polarizing lens or eyewear having a curved shape, the hue change is evaluated when the inclination angle is 10 degrees or more and preferably 30 degrees or more. For example, when the hue change is small at a larger inclination angle, the effect of the present invention can be expected even in a polarizing lens or eyewear having a large curve diameter.

The evaluation of the hue change is, for example, a hue difference of each inclination angle with respect to the inclination angle of 0 degrees and can be represented by $|\Delta a^*|$ and $|\Delta b^*|$ as absolute values. Both $|\Delta a^*|$ and $|\Delta b^*|$ are preferably within 2.0 and more preferably within 1.0. Setting of the hue difference within these ranges is preferable, because, in visual evaluation, a change in coloring between in a case of being viewed from the front direction and in a case of being viewed inclined from the front direction is hardly visible.

In the light reflecting phase and the optical laminate of the present invention, preferably, the amount of change in reflection hue of the light reflecting layer satisfies $|\Delta a^*| \leq 2.0$ and $|\Delta b^*| \leq 2.0$ when the observation position is inclined to 60° where the direction in which the observation position is perpendicular to the reflective surface is set as 0°.

It is preferable that $|\Delta a^*|$ and $|\Delta b^*|$ fall within the above ranges when the observation position is inclined to 60 degrees.

(Measurement of Polarization Degree)

An example of a method for measuring the polarization degree is described. Ky (absolute parallel transmittance) and Kz (absolute direct transmittance) in a wavelength region of 380 to 780 nm are obtained by an absolute polarization method using polarized light as an incident light source, and then converted into a single body transmittance Ts, a parallel transmittance Tp, and an orthogonal transmittance Tc of each wavelength in natural light measurement from the group of Equation (1). From Tp and Tc, a visibility correction parallel transmittance Yp and a visibility correction orthogonal transmittance Yc are obtained from Equation (2) based on JIS Z 8722: 2009. The calculation is performed in a wavelength region of 380 to 780 nm, and in the equation, a spectral transmittance $\tau\lambda$ at every predetermined wavelength interval $d\lambda$ (here, 5 nm) is used, $P\lambda$ represents the spectral distribution of a standard light (C light source), and $y\lambda$ represents the 2-degree field color matching function. Similarly, the visibility correction transmittance Ys can be calculated by using Ts.

[Mathematical formula 1]

$$
\begin{aligned}
T s &= (K y + K z) / 2 \\
T p &= (K y^2 + K z^2) / 2 0 0 \\
T c &= (K y \times K z) / 1 0 0 \qquad \cdots \quad (\text{Equation 1})
\end{aligned}
$$

[Mathematical formula 2]

$$
Y = \frac{\displaystyle\int_{380}^{780} P\lambda \cdot y\lambda \cdot \tau\lambda \cdot d\lambda}{\displaystyle\int_{380}^{780} P\lambda \cdot y\lambda \cdot d\lambda} \qquad \cdots \quad (\text{Equation 2})
$$

The visibility correction polarization degree Py can be obtained from Equation (3) by using Yp and Yc obtained above.
[Mathematical formula 3]

$$
P y = \{ (Y p - Y c) / (Y p + Y c) \}^{1/2} \times 1 0 0 \quad \cdots \quad (\text{Equation 3})
$$

The polarization degree can be measured by using, for example, a spectrophotometer U-4100 manufactured by Hitachi High-Tech Science Corporation. When the optical laminate includes the polarizing element, it is preferable that the test sample is installed so that the polarizing element side becomes the incident surface of the light source.
In the optical laminate of the present invention, the visibility correction polarization degree (Py) is preferably 75% or more and less than 100% and more preferably 90% or more and less than 100%.
It is preferable that Py is in the above range, because when the optical laminate is used as a lens, it is possible to obtain polarized sunglasses having a high anti-glare effect against external light including reflected light.

[Examples]

Hereinafter, the present invention is described more specifically with reference to examples, but the present invention is not limited to such examples.

[Example 1]

(Preparation of Polarizing Element)

NYSH-30 manufactured by Nippon Kayaku Co., Ltd. which is a dye-based PVA-based resin film for polarized sunglasses was used as a polarizing element. The polarizing element exhibits a gray color, and polarization characteristics were measured by using a spectrophotometer U-4100 manufactured by Hitachi High-Tech Science Corporation. As a result, the visibility correction transmittance (Ys) was 38.0%, and the visibility correction polarization degree (Py) was 99.50%. At this time, the hues in the L*a*b* color space were a* = -1.1 and b* = 5.3.

(Production of Cholesteric Liquid Crystal Layer)

As for the cholesteric liquid crystal layer, a cholesteric liquid crystal layer (cholesteric liquid crystal layer R form) having right-handed helical alignment was produced on a PET film (A4100, film thickness of 50 um) manufactured by Toyobo Co., Ltd., which was subjected to rubbing treatment as a base material, in accordance with the description of Example 1 in JP 2003-139953 A. At this time, after the mixed solution (coating solution) was applied onto the base material, a treatment of aligning the cholesteric liquid crystal layer by storing the coating film from which the solvent was removed at 120°C for 30 minutes as an alignment treatment time was added. The obtained cholesteric liquid crystal layer had a film thickness of about 4 um. In addition, the tint when the sample was placed flat with the reflective surface facing upward and viewed from directly above (front direction) exhibits a silver color.

(Production of Optical Laminate)

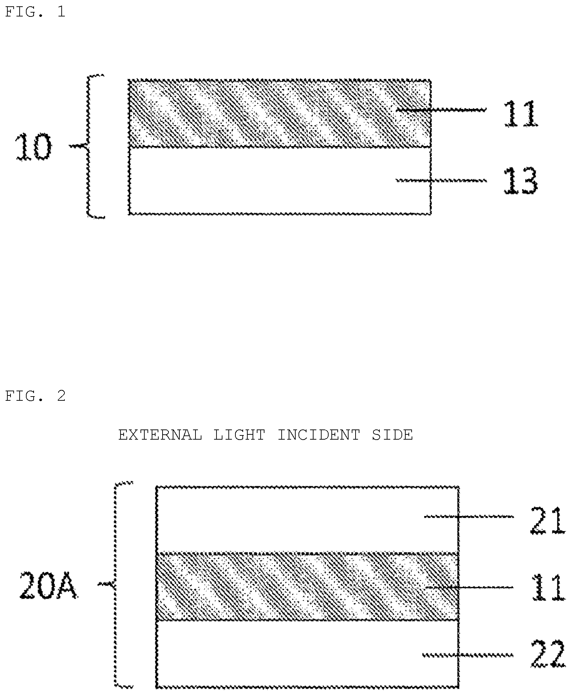

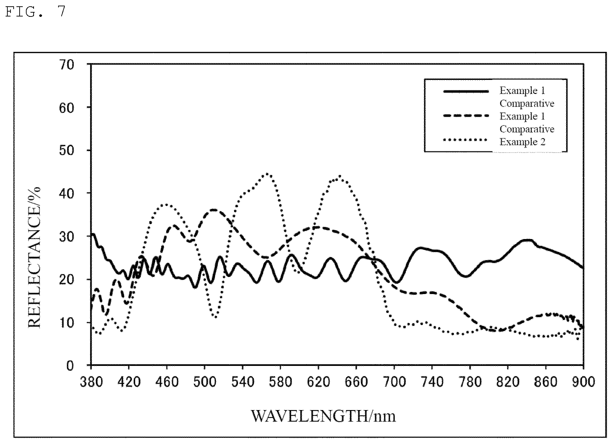

The polarizing element and a PC-based resin film (PANLITE FILM PC-2151 manufactured by Teijin Limited, film thickness: 125 um) were laminated by using the ultraviolet curable adhesive described in Example 1 of WO 2019/116760 A to obtain a polarizing plate having a support on one side. Next, the liquid crystal layer surface of the cholesteric liquid crystal layer R form and a TAC-based resin film (13SG80S-LH manufactured by IPI GmbH, film thickness: 80 um) were laminated by using an ultraviolet curable adhesive in the same manner as described above, and then the PET base material was peeled off to obtain a cholesteric liquid crystal layer R form having a support on one side. Further, the polarizing element surface of the polarizing plate and the liquid crystal layer surface of the cholesteric liquid crystal layer R form were laminated by using an ultraviolet curable adhesive in the same manner as described above to produce an optical laminate having one liquid crystal layer illustrated in Fig. 2. The optical laminate was measured under a detection condition of 1 nm pitch by using U-4100 manufactured by Hitachi High-Tech Science Corporation, and the reflection spectrum thereof is illustrated in Fig. 7. From this spectrum, the average reflectance at a wavelength of 380 nm to 780 nm was calculated and found to be 22.8%.

The reflectance of the obtained optical laminate was measured under a detection condition of a pitch of 1 nm by using U-4100 manufactured by Hitachi High-Tech Science Corporation, and the average reflectance (R1) at a wavelength of 500 nm to 700 nm was 22.4%, and the average reflectance (R2) at a wavelength of 701 nm to 900 nm was 25.0%.

Further, when Py of the obtained optical laminate was measured by using U-4100 manufactured by Hitachi High-Tech Science Corporation, Py was 89.8%.

[Table 1]

| | Light Reflecting Layer | | | Optical Laminate | | | |
|---|---|---|---|---|---|---|---|
| | Configuration of Liquid Crystal Layer | Tint of Reflective Layer When Observed from Front | Average Reflectance (380-780 nm) | Average Reflectance (R1) | Average Reflectance (R2) | $|\Delta R1-R2|$ | Polarization Degree |
| | | | % | % | % | | % |
| Example 1 | One Layer | Silver Color | 22.8 | 22.4 | 25.0 | 2.6 | 89.8 |
| Example 2 | One Layer | Silver Color | 17.1 | 16.1 | 15.4 | 0.7 | 96.7 |
| Example 3 | One Layer | Silver Color | 10.4 | 10.9 | 9.6 | 1.3 | 97.0 |
| Example 4 | One Layer | Silver Color | 28.9 | 29.3 | 23.1 | 6.2 | 79.6 |
| Example 5 | One Layer | Silver Color | 25.9 | 26.5 | 24.7 | 1.8 | 84.2 |
| Comparative Example 1 | One Layer | Silver Color | 24.7 | 29.0 | 12.4 | 16.6 | 82.1 |
| Comparative Example 2 | Three Layers | Silver Color | 24.4 | 31.5 | 8.0 | 23.4 | 75.4 |

(Angle Dependence of Reflection Hue of Optical Laminate)

The angle dependence of the reflection hue of the obtained optical laminate was evaluated by using a motorized goniometer (DMS 505) manufactured by KONICA MINOLTA, INC., and the hue values (a*, b*) when the inclination angles of the light receiving unit of the device were 0 degrees, 10 degrees, 30 degrees, and 60 degrees were obtained. The hue values were measured when the stage of the device was rotated in directions of 0 degrees, 45 degrees, and 90 degrees, respectively, but there was no significant difference in each direction, and thus the hue value was obtained as an average value thereof. The evaluation results are shown in Table 2. In the present invention, $\Delta a*$ and $\Delta b*$ represent hue differences from each inclination angle with respect to the inclination angle of 0 degrees.

[Table 2]

Angle Dependence of Reflection Hue of Optical Laminate

| Configuration of Liquid Crystal Layer of Light Reflecting Layer | Hue Value of Perpendicular Direction (0 Degrees) | | Hue Value at Inclination of 10 Degrees | | | | Hue Value at Inclination of 30 Degrees | | | | Hue Value at Inclination of 60 Degrees | | | |
|---|---|---|---|---|---|---|---|---|---|---|---|---|---|---|
| | $a^*$ | $b^*$ | $a^*$ | $|\Delta a^*|$ | $b^*$ | $|\Delta b^*|$ | $a^*$ | $|\Delta a^*|$ | $b^*$ | $|\Delta b^*|$ | $a^*$ | $|\Delta a^*|$ | $b^*$ | $|\Delta b^*|$ |
| Example 1 — One Layer | -0.7 | -2.8 | -0.9 | 0.2 | -2.5 | 0.3 | -0.7 | 0.0 | -2.9 | 0.1 | -0.7 | 0.0 | -3.8 | 1.0 |
| Example 2 — One Layer | 0.1 | -2.4 | -0.1 | 0.2 | -1.9 | 0.5 | -0.1 | 0.2 | -2.0 | 0.4 | -0.1 | 0.2 | -1.1 | 1.3 |
| Example 3 — One Layer | -0.4 | 0.1 | -0.8 | 0.4 | 0.6 | 0.5 | -1.4 | 1.0 | 0.8 | 0.7 | -2.1 | 1.7 | 0.0 | 0.1 |
| Example 4 — One Layer | -0.1 | -3.0 | -0.4 | 0.3 | -2.4 | 0.6 | -0.5 | 0.4 | -2.6 | 0.4 | 0.0 | 0.1 | -3.1 | 0.1 |
| Example 5 — One Layer | 0.1 | -3.2 | -0.2 | 0.3 | -2.4 | 0.8 | -0.2 | 0.3 | -2.6 | 0.6 | 0.0 | 0.1 | -2.3 | 0.9 |
| Comparative Example 1 — One Layer | -0.8 | -3.4 | -0.9 | 0.1 | -3.2 | 0.2 | -0.2 | 0.6 | -4.7 | 1.3 | 0.5 | 1.4 | -7.5 | 4.1 |
| Comparative Example 2 — Three Layers | 1.1 | -3.2 | 1.2 | 0.0 | -3.3 | 0.1 | 1.6 | 0.5 | -3.7 | 0.5 | 4.2 | 3.1 | -2.1 | 1.1 |

(Shaping Processing of Optical Laminate)

The shaping processing of the obtained optical laminate was performed by using a hot press machine. The optical laminate was placed on a bending die (concave die, 9 cmΦ), and a hemispherical hot iron ball heated to 100°C was pressed for about three minutes to bend the optical laminate so that the reflective surface was on the convex side. The bending degree of the obtained curved shape was measured with a curve meter (model number 340) manufactured by SAN NISHIMURA CO., LTD., and the value was 8 curves.

(Visual Evaluation of Reflection Hue of Shaped Product)

The optical laminate subjected to the shaping processing described above was placed flat with the reflective surface on the upper side, and the tint of the reflective layer when observed from directly above (front direction) of the optical laminate and the tint when observed with the viewpoint inclined in an oblique direction (angle of about 45 degrees to 60 degrees) were evaluated according to the following criterion. The visual evaluation results are shown in Table 3.

(Determination Criterion)

O: It looks silver and a tint is not felt.

X: A tint of light green or light pink is visible.

[Table 3]

|  | Light Reflecting Layer | After Shaping Processing | |
|---|---|---|---|
|  | Configuration of Liquid Crystal Layer | Tint from Front | Tint in Oblique Direction |
| Example 1 | One Layer | O | O |
| Example 2 | One Layer | O | O |
| Example 3 | One Layer | O | O |
| Example 4 | One Layer | O | O |
| Example 5 | One Layer | 0 | O |
| Comparative Example 1 | One Layer | O | X |
| Comparative Example 2 | Three Layers | O | X |

[Comparative Example 1]

The description is the same as that of Example 1 except that the cholesteric liquid crystal layer R form was produced by setting the alignment treatment time of the cholesteric liquid crystal layer to five minutes so as to obtain the reflection spectrum shown in Fig. 7. At this time, the average reflectance at a wavelength of 380 nm to 780 nm was 24.7%, the average transmittance (R1) at a wavelength of 500 nm to 700 nm of the optical laminate was 29.0%, and the average transmittance (R2) at a wavelength of 701 nm to 900 nm was 12.4%. In addition, Py was 82.1%.

[Comparative Example 2]

(Production of Cholesteric Liquid Crystal Layer)

As for the cholesteric liquid crystal layer, a cholesteric liquid crystal layer having a maximum reflectance at a wavelength of 460 nm and right-handed helical alignment (hereinafter, referred to as a light reflecting layer R460), a cholesteric liquid crystal layer having a maximum reflectance at a wavelength of 560 nm and left-handed helical alignment (hereinafter, referred to as a light reflecting layer L560), and a cholesteric liquid crystal layer having a maximum reflectance at a wavelength of 640 nm and right-handed helical alignment (hereinafter, referred to as a light reflecting layer R640) were produced on the PET base material of Example 1 in accordance with the description of Example 1 in WO 2017/175581 A. Each of the obtained reflective layers had a film thickness of about 4.5 μm.

(Production of Optical Laminate)

The polarizing element of Example 1 and the PC-based resin film of Example 1 were laminated by using the ultraviolet curable adhesive described in Example 1 of WO 2019/116760 A to obtain a polarizing plate having a support on one side. Next, the liquid crystal layer surface of the light reflecting layer R460 and the TAC-based resin film of Example 1 were laminated by using an ultraviolet curable adhesive in the same manner as described above, and then the PET base material was peeled off to obtain the light reflecting layer R460 having a support on one side. Next, the liquid crystal layer surfaces of the light reflecting layer L560 and the light reflecting layer R640 were similarly laminated by using an ultraviolet curable adhesive. Subsequently, the PET base material on the light reflecting layer L560 side of the laminate was peeled off, and the liquid crystal surface and the liquid crystal layer surface of the light reflecting layer R460 were similarly laminated by using an ultraviolet curable adhesive. Next, the PET base material on the light reflecting layer R640 side of the laminate was peeled off, and the liquid crystal layer surface and the polarizing element surface of the polarizing plate were similarly laminated by using an ultraviolet curable adhesive to produce an optical laminate having three liquid crystal layers. The reflection hue when viewed from the front of the optical laminate exhibits a silver color. The optical laminate was measured under a detection condition of 1 nm pitch by using U-4100 manufactured by Hitachi High-Tech Science Corporation, and this reflection spectrum is illustrated in Fig. 7. From this spectrum, the average reflectance at a wavelength of 380 nm to 780 nm was calculated and found to be 24.4%. In addition, Py was 75.4%.

The description is the same as that in Example 1 except for the production of the cholesteric liquid crystal layer and the optical laminate.

Table 1 shows the evaluation results of cholesteric liquid crystal layers and the optical laminates produced in Example 1 and Comparative Examples 1 and 2.

In the case of Example 1, since the reflectance was substantially uniform over a wavelength of 380 nm to 900 nm, the difference ($|\Delta R1 - R2|$) between the average reaction difference ratio R1 and the average reflectance R2 was as small as 2.6. In addition, as shown in Table 2, even when the change in the reflection hue in the oblique direction of the optical laminate was inclined by 60 degrees, both $|\Delta a^*|$ and $|\Delta b^*|$ were within 1.0, and the hue change was hardly observed. From this, by having reflection characteristics equivalent to those in the visible light region even in the long wavelength range, it was possible to obtain an achromatic silver reflection hue having no angle dependence. Furthermore, as shown in Table 3, no tint was observed in the front and oblique directions even after the shaping processing of the optical laminate, and a correlation between quantitative evaluation by the measurement device and visual evaluation was obtained.

In the case of Comparative Example 1, since the reflectance was not substantially uniform over a wavelength of 380 nm to 900 nm, the difference ($|\Delta R1 - R2|$) between the average reaction difference ratio R1 and the average reflectance R2 was 16.6 and larger than Example 1. In addition, as shown in Table 2, when the change in the reflection hue in the oblique direction of the optical laminate was inclined by 60 degrees, both $|\Delta a^*|$ and $|\Delta b^*|$ exceeded 1.0. Furthermore, as shown in Table 3, a tint was seen when observed in the oblique direction even after the shaping processing of the optical laminate, and a correlation between quantitative evaluation by the measurement device and visual evaluation was obtained.

In the case of Comparative Example 2, since the reflectance was not substantially uniform over a wavelength of 380 nm to 900 nm, the difference ($|\Delta R1 - R2|$) between the average reflectance R1 and the average reflectance R2 was 23.4 and larger than that in Example 1. In addition, as shown in Table 2, when the change in the reflection hue in the oblique direction of the optical laminate was inclined by 60 degrees, both $|\Delta a^*|$ and $|\Delta b^*|$ exceeded 1.0. Furthermore, as shown in Table 3, a tint was seen when observed in the oblique direction even after the shaping processing of the optical laminate, and a correlation between quantitative evaluation by the measurement device and visual evaluation was obtained.

Hereinafter, optical laminates were produced in Examples 2 to 4 based on Example 1. The evaluation results are shown in Tables 1 to 3.

[Example 2]

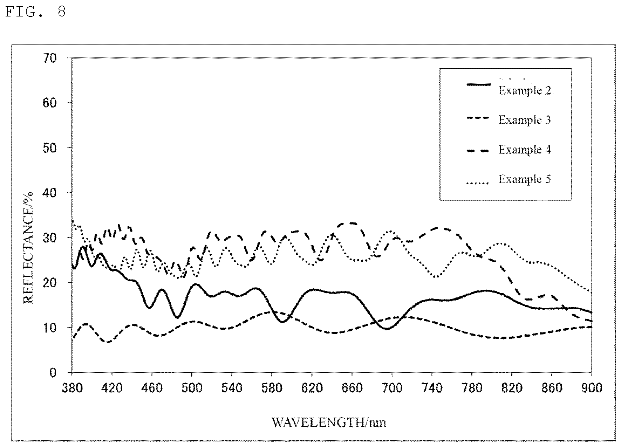

The description is the same as that of Example 1 except that the cholesteric liquid crystal layer R form was produced by adjusting the film thickness of the cured coating film to about 3 um so as to have the reflection spectrum illustrated in Fig. 8. At this time, the average reflectance at a wavelength of 380 nm to 780 nm was 17.1%, the average transmittance (R1) at a wavelength of 500 nm to 700 nm of the optical laminate was 16.1%, and the average transmittance (R2) at a wavelength of 701 nm to 900 nm was 15.4%. In addition, Py was 96.7%.

[Example 3]

The description is the same as that of Example 1 except that the cholesteric liquid crystal layer R form was produced by adjusting the film thickness of the cured coating film to about 2 um so as to have the reflection spectrum illustrated in Fig. 8. At this time, the average reflectance at a wavelength of 380 nm to 780 nm was 10.4%, the average transmittance (R1) at a wavelength of 500 nm to 700 nm of the optical laminate was 10.9%, and the average transmittance (R2) at a wavelength of 701 nm to 900 nm was 9.6%. In addition, Py was 97.0%.

[Example 4]

The description is the same as that of Example 1 except that the cholesteric liquid crystal layer R form was produced by adjusting the film thickness of the cured coating film to about 6 um so as to have the reflection spectrum illustrated in Fig. 8. At this time, the average reflectance at a wavelength of 380 nm to 780 nm was 28.9%, the average transmittance (R1) at a wavelength of 500 nm to 700 nm of the optical laminate was 29.3%, and the average transmittance (R2) at a wavelength of 701 nm to 900 nm was 23.1%. In addition, Py was 79.6%.

[Example 5]

The description is the same as that of Example 1 except that the cholesteric liquid crystal layer R form was produced by adjusting the film thickness of the cured coating film to about 5 um so as to have the reflection spectrum illustrated in Fig. 8. At this time, the average reflectance at a wavelength of 380 nm to 780 nm was 25.9%, the average transmittance (R1) at a wavelength of 500 nm to 700 nm of the optical laminate was 26.5%, and the average transmittance (R2) at a wavelength of 701 nm to 900 nm was 24.7%. In addition, Py was 84.2%.

From Examples 2 to 5, it was possible to obtain a light reflecting layer in which |ΔR1 - R2| was 10 or less when the average reflectance at a wavelength of 380 nm to 780 nm was calculated in the range of about 10% to 29%. In these optical laminates, it was confirmed that both |Δa*| and |Δb*| were 2.0 or less, and there was no coloring even when the angle was changed. In addition, it was confirmed that there was no coloring in the appearance observation after the shaping processing as in Example 1.

From the results in Table 1, it was found that the optical laminate of the present invention can change the Py depending on the average reflectance at a wavelength of 380 nm to 780 nm. For example, in the case of Example 3, when the average reflectance was 10.4%, the Py was 97.0%, which was the highest value, and the polarization characteristics of the polarizing element alone could be maintained. Meanwhile, in the case of Example 4, the average reflectance was 28.9%, which was high reflection characteristics, but the Py was 79.6%, and the polarization characteristics were deteriorated. In particular, in Example 5, the average reflectance at a wavelength of 380 nm to 780 nm was equivalent to that in Comparative Examples 1 to 2, but Py was higher than that in these comparative examples, and according to the present invention, an optical laminate having optical characteristics superior to those of the configuration in the related art could be obtained.

(Eyewear Processing)

Using the optical laminate obtained in Examples 1 to 5, a series of processing into eyewear was performed in order to confirm processability into eyewear and the effect of the present invention. Each optical laminate was subjected to shaping processing and then integrally molded by using a PC resin by a processing method in the related art to obtain a polarizing lens for eyewear. Furthermore, the polarizing lens was subjected to ball grinding processing and fixed to a commercially available plastic frame to produce polarized sunglasses including the optical laminate of the present invention. In various steps, even when the optical laminate of the present invention was used, peeling between layers, discoloration of the light reflecting layer, and the like were not observed, and it was confirmed that there was no problem in the processability of eyewear.

In addition, it was confirmed that the hue of the lens surface did not change even when the obtained polarized sunglasses were worn by the tester, and the tester was observed from the front or oblique direction by another tester, and the lens remained in a colorless silver color.

Industrial Applicability

From the above results, according to the present invention, even in the case of the light reflecting layer made of an organic substance, a colorless reflecting surface exhibiting achromatic silver even when observed from any angle can be obtained, and thus eyewear (such as sunglasses, goggles, and helmet visors) excellent not only in durability but also in designability can be provided. Furthermore, in the eyewear including the optical laminate including the polarizing element, the optical design of the eyewear can be realized more widely in a case where the reflectance of the light reflecting layer of the eyewear is emphasized while giving the effect of the present invention, a case where the polarization degree as the polarized sunglasses is emphasized, a case where the balance is considered.

Reference Signs List

10 CHOLESTERIC LIQUID CRYSTAL LAYER FORMED ON PLASTIC BASE MATERIAL
11 CHOLESTERIC LIQUID CRYSTAL LAYER R FORM (OR L FORM)
12 CHOLESTERIC LIQUID CRYSTAL LAYER L FORM (OR R FORM)
13 PLASTIC BASE MATERIAL
20 OPTICAL LAMINATE
20A ASPECT OF OPTICAL LAMINATE
20B ASPECT OF OPTICAL LAMINATE
20C ASPECT OF OPTICAL LAMINATE
20D ASPECT OF OPTICAL LAMINATE
21 FIRST SUPPORT
22 SECOND SUPPORT
23 POLARIZING ELEMENT
30 MEASUREMENT STAGE
31 LIGHT RECEIVING UNIT OF MEASUREMENT DEVICE INSTALLED AT POSITION OF 0 DEGREES
32 LIGHT RECEIVING UNIT OF MEASUREMENT DEVICE WHEN INCLINED AT ANGLE θ
33 SAMPLE

**Claims**

1. An optical laminate for eyewear comprising:

   a light reflecting layer comprising at least one cholesteric liquid crystal layer; and
   a support sandwiching the light reflecting layer, wherein
   a reflection hue of the light reflecting layer exhibits a silver color,
   the light reflecting layer has a reflection characteristic over a wavelength range of at least 380 nm to 900 nm, and
   an absolute value of a difference ($\Delta$R1 - R2) between an average reflectance (R1) at 500 nm to 700 nm and an average reflectance (R2) at 701 nm to 900 nm of the light reflecting layer is 10 points or less in the wavelength range.

2. The optical laminate for eyewear according to claim 1, wherein the amount of change in reflection hue of the light reflecting layer satisfies $|\Delta a^*| \leq 2.0$ and $|\Delta b^*| \leq 2.0$ when an observation position is inclined to 60° where a direction in which the observation position is perpendicular to a reflective surface is set as 0°.

3. The optical laminate for eyewear according to claim 1 or 2, wherein the light reflecting layer is formed by laminating a cholesteric liquid crystal layer (R form) having a right-handed helical direction and a cholesteric liquid crystal layer (L form) having a left-handed helical direction.

4. The optical laminate for eyewear according to any one of claims 1 to 3, further comprising a polarizing element.

5. The optical laminate for eyewear according to any one of claims 1 to 4, comprising, in this order from an external light incident side: the support; the light reflecting layer; the polarizing element; and the support.

6. The optical laminate for eyewear according to claim 5, wherein a visibility correction polarization degree (Py) is 75% or more and less than 100%.

7. A lens comprising: the optical laminate for eyewear according to any one of claims 1 to 6.

8. Eyewear comprising the lens according to claim 7.

FIG. 1

FIG. 2

EXTERNAL LIGHT INCIDENT SIDE

FIG. 3

EXTERNAL LIGHT INCIDENT SIDE

FIG. 4

EXTERNAL LIGHT INCIDENT SIDE

FIG. 5

EXTERNAL LIGHT INCIDENT SIDE

FIG. 6

FIG. 7

FIG. 8

<div align="center">**INTERNATIONAL SEARCH REPORT**</div>

| | International application No. |
|---|---|
| | **PCT/JP2022/012464** |

**A. CLASSIFICATION OF SUBJECT MATTER**

*G02B 5/30*(2006.01)i; *B32B 7/023*(2019.01)i; *G02B 5/08*(2006.01)i; *G02C 7/10*(2006.01)i; *G02C 7/12*(2006.01)i
FI: G02B5/30; G02C7/10; G02C7/12; G02B5/08 A; B32B7/023

According to International Patent Classification (IPC) or to both national classification and IPC

**B. FIELDS SEARCHED**

Minimum documentation searched (classification system followed by classification symbols)

G02B5/30; B32B7/023; G02B5/08; G02C7/10; G02C7/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/175581 A1 (NIPPON KAYAKU KK) 12 October 2017 (2017-10-12) paragraphs [0008]-[0011], [0033], [0041]-[0057] | 1-5 |
| Y | paragraphs [0008]-[0011], [0033], [0041]-[0057] | 6-8 |
| Y | WO 2020/235413 A1 (POLATECHNO CO., LTD.) 26 November 2020 (2020-11-26) paragraphs [0091]-[0094], [0098] | 6-8 |
| A | JP 2020-76972 A (NIPPON KAYAKU KK) 21 May 2020 (2020-05-21) entire text | 1-8 |
| A | WO 2018/159297 A1 (ZEON CORP.) 07 September 2018 (2018-09-07) entire text | 1-8 |

☐ Further documents are listed in the continuation of Box C.   ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2022** | **24 May 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/012464**

| Patent document cited in search report | | | Publication date (day/month/year) | Patent family member(s) | | | Publication date (day/month/year) |
|---|---|---|---|---|---|---|---|
| WO | 2017/175581 | A1 | 12 October 2017 | US paragraphs [0008]-[0019], [0044], [0052]-[0073] EP KR CN | 2019/0033498 3441801 10-2018-0125593 109073808 | A1 A1 A A | |
| WO | 2020/235413 | A1 | 26 November 2020 | TW | 202103922 | A | |
| JP | 2020-76972 | A | 21 May 2020 | (Family: none) | | | |
| WO | 2018/159297 | A1 | 07 September 2018 | US entire text CN KR | 2020/0233133 110249244 10-2019-0124714 | A1 A A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016002582 A
- JP 2003315556 A
- JP 2004029824 A
- JP 2002179668 A
- JP 2003139953 A

- JP H0312606 A
- JP 59145255 A
- WO 2019116760 A
- WO 2017175581 A

**Non-patent literature cited in the description**

- *Journal of Japanese Liquid Crystal Society,* 25 April 1998, vol. 2 (2